(19) Europäisches Patentamt
European Patent Office
Office européen des brevets

(11) EP 4 245 811 A1

(12) **EUROPEAN PATENT APPLICATION**
published in accordance with Art. 153(4) EPC

(43) Date of publication:
**20.09.2023 Bulletin 2023/38**

(21) Application number: **22860911.1**

(22) Date of filing: **24.05.2022**

(51) International Patent Classification (IPC):
***C08L 101/00*** *(2006.01)* ***C08K 9/06*** *(2006.01)*
***C08L 75/04*** *(2006.01)* ***C08L 83/06*** *(2006.01)*
***C08L 83/07*** *(2006.01)*

(52) Cooperative Patent Classification (CPC):
**C08K 9/06; C08L 75/04; C08L 83/04; C08L 83/06; C08L 101/00**

(86) International application number:
**PCT/JP2022/021189**

(87) International publication number:
**WO 2023/026615 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2021 JP 2021139034**

(71) Applicant: **Resonac Corporation**
**Tokyo 105-8518 (JP)**

(72) Inventors:
- **MINORIKAWA, Naoki**
  **Yokohama-shi, Kanagawa 221-8517 (JP)**
- **FUNAHASHI, Hajime**
  **Yokohama-shi, Kanagawa 221-8517 (JP)**
- **SATOH, Hikaru**
  **Yokohama-shi, Kanagawa 221-8517 (JP)**
- **YUKUTAKE, Hajime**
  **Yokohama-shi, Kanagawa 221-8517 (JP)**

(74) Representative: **Strehl Schübel-Hopf & Partner**
**Maximilianstrasse 54**
**80538 München (DE)**

# (54) THERMALLY CONDUCTIVE COMPOSITION

(57) A thermally conductive composition comprising: a filler; and a polymer component, wherein the filler comprises at least one surface-treated filler selected from the group consisting of the following filler (A) and filler (B):
Filler (A): A filler surface-treated by a chemical vapor deposition method using a siloxane having one SiH group
Filler (B): A filler surface-treated by a chemical vapor deposition method using a siloxane having two or more SiH groups, wherein at least one group selected from the group consisting of an unsubstituted alkyl group having 6 to 20 carbon atoms, an alkyl group having 2 to 20 carbon atoms having a substituent, and a group having a specific structure is further bonded to a silicon atom on a surface of the filler and introduced.

EP 4 245 811 A1

## Description

### Technical Field

The present invention relates to a thermally conductive composition.

### Background Art

As the term thermal design suggests, it is becoming important to remove heat from a heat generating body. Recently, countermeasures against heat have been actively researched and implemented in a field such as an automobile ECU (Electronic Control Unit) or battery, or a base station based on the fifth generation mobile communication system (5G) (5G base station). For a heat generating element mounted thereon, a part thereof may malfunction or become a factor of failure as the temperature rises. Because of this, various heat dissipating materials are used as countermeasures against heat.

As such a heat dissipating material, grease, a heat dissipating sheet, an adhesive, or the like in which a thermally conductive filler is added to an elastomer is used. As the performance of a heat generating element increases, the heat generated by the heat generating element tends to increase more and more, and a material having a high thermal conductivity is required in order to quickly transfer the heat out of the system. In order to increase the thermal conductivity of the heat dissipating material, increasing the amount of the filler used for filling is easy and has a tremendous effect. However, in order to increase the amount of the filler used for filling, it is necessary to devise a measure such as using an elastomer having a low viscosity or using a filler having a small specific surface area whenever possible, and there is a hesitation in using these because of the product lineup, price, or the like. For this reason, a surface treatment of the filler is carried out as a method for facilitating the filling with a filler. A frequently used surface treatment agent is a silane coupling agent. The silane coupling agent has both an alkoxy group that binds to the surface of a filler and a hydrophobic group that binds to a polymer material in a molecule thereof, and functions to connect the filler and the polymer material. The hydrophobic group is mostly composed of a hydrocarbon, which easily makes the same compatible with an elastomer. Because of this, the filler surface-treated with a silane coupling agent can increase the amount in which an elastomer is filled therewith.

In addition, in recent years, a heat dissipating material made of a soft material has been used in order to minimize application of a load to a substrate, a heat generating element, or the like, and a silane coupling agent that does not have a point of attachment to a polymer is mainly used as a surface treatment agent for a filler. Such a silane coupling agent is also sometimes referred to as a silane agent. The filler surface-treated with a silane agent can further increase the amount in which an elastomer is filled therewith and can reduce the hardness of the resulting cured product, and thus the silane agent can be deemed to be a good surface treatment agent at present.

Increasing the number of carbon atoms in a hydrophobic group of a silane coupling agent easily makes the same compatible with an elastomer. A silane coupling agent having a hydrophobic group having up to about 18 carbon atoms is available, but when the number of carbon atoms increases, the alkoxy group becomes difficult to hydrolyze, it may be difficult to create a solution for dispersion in a filler, or the polymerization between silane coupling agents and the polymer film formation thereof may be slow or may not occur, and there is the following problem: a large amount of an unreacted silane coupling agent remains in the polymer system. In addition, the unreacted silane coupling agent volatilizes, causing a problem such as contamination of the apparatus or reduction of the heat resistance of the heat dissipating material.

In order to solve these problems, various methods have so far been proposed for a surface treatment of a filler.

For example, Patent Literature 1 proposes a method for surface-treating a thermally conductive inorganic powder using a silane compound having 6 or more carbon atoms or a partially hydrolyzed product thereof by a dry method or a wet method. In addition, Patent Literature 2 proposes a method for producing a silicone-coated filler, comprising: a first step of reacting some of a plurality of SiH groups, which a first silicone material has, with a surface of a particulate material mainly including an inorganic oxide formed by oxidizing a predetermined element and having an OH group on a surface thereof; and a second step of subjecting a second silicone material having an alkenyl group at an end thereof to an addition reaction with at least a part of a remainder of the plurality of SiH groups derived from the first silicone material. Further, Patent Literature 3 proposes a method for surface-treating a thermally conductive filler by an integral method using dimethylpolysiloxane having one molecular chain end capped with a trialkoxysilyl group.

### Citation List

#### Patent Literature

PTL1: WO 2009/136542
PTL2: WO 2019/069535
PTL3: JP 2020-180200 A

## Summary of Invention

### Technical Problem

In the method of Patent Literature 1, a silane compound having a relatively long carbon chain is used as a surface treatment agent, and thus a thermally conductive composition including a filler surface-treated with the silane compound has high thermal conductivity and can reduce the hardness of the cured product. In addition, a pretreatment is carried out by a dry method or a wet method as a method for surface-treating the filler, and thus the amount of the remaining silane compound is small. However, a problem is that the polymerization and the polymer film formation of the silane compound do not proceed, causing reduction of the heat resistance of the cured product. In addition, because the polymerization and the polymer film formation of the silane compound do not proceed, an alkoxy group remains in the system. Because of this, in the condensation reaction system, problems are that the reaction is abnormally fast, such as curing of the composition during mixing, and that the hardness of the cured product is abnormally high.

In the method of Patent Literature 2, it is necessary to know the amount of an SiH group remaining after the second step, and the second silicone material may remain in the system. If there are many SiH groups remaining on the surface of the filler, thixotropy is imparted to the composition including the filler to reduce the fluidity, making it difficult to apply or print the composition or causing reduction of the processability when forming the composition into a sheet. In addition, the remaining second silicone material has the problem of adversely affecting the hardness adjustment, the storage stability, and the reaction rate of the composition.

In the method of Patent Literature 3, dimethylpolysiloxane having one molecular chain end capped with a trialkoxysilyl group is used as a surface treatment agent, and thus the filler surface-treated with the dimethylpolysiloxane has excellent compatibility with silicone. However, because the dimethylpolysiloxane has a trialkoxy group, the dimethylpolysiloxane behaves as a crosslinking agent in the condensed silicone system, and a problem is that it is impossible to adjust the hardness of the thermally conductive composition and control the reaction time.

The present invention has been made in view of such circumstances, and an object thereof is to provide a thermally conductive composition that has a moderate reaction rate and can allow a cured product having a high thermally conductive property, excellent heat resistance, a moderate hardness, and excellent restorability to be obtained.

### Solution to Problem

The present inventors have carried out intensive studies in order to solve the above technical problem and as a result have found that the above technical problem can be solved by the following invention.

That is, the present disclosure relates to the following.

[1] A thermally conductive composition comprising: a filler; and a polymer component, wherein the filler comprises at least one surface-treated filler selected from the group consisting of the following filler (A) and filler (B):

Filler (A): A filler surface-treated by a chemical vapor deposition method using a siloxane having one SiH group
Filler (B): A filler surface-treated by a chemical vapor deposition method using a siloxane having two or more SiH groups, wherein at least one group selected from the group consisting of an unsubstituted alkyl group having 6 to 20 carbon atoms, an alkyl group having 2 to 20 carbon atoms having a substituent, and a group represented by the following general formula (I) is further bonded to a silicon atom on a surface of the filler and introduced.

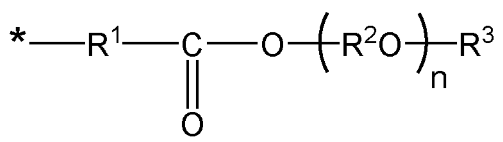

(I)

wherein $R^1$ and $R^2$ are each independently an alkylene group having 2 to 6 carbon atoms, and $R^3$ is an alkyl group having 1 to 3 carbon atoms; when a plurality of $R^2$ are present, the plurality of $R^2$ are identical to or different from each other; n is an integer of 1 to 9; and * represents a point of attachment to a silicon atom.

[2] The thermally conductive composition according to [1] above, wherein a total content of the filler (A) and the filler

(B) included in the filler is 30% by mass or more and 100% by mass or less.

[3] The thermally conductive composition according to [1] or [2] above, wherein the filler is at least one selected from the group consisting of a metal, silicon, a metal oxide, a nitride, and a composite oxide.

[4] The thermally conductive composition according to any one of [1] to [3] above, wherein the polymer component is at least one selected from the group consisting of a thermosetting resin, an elastomer, and an oil.

[5] The thermally conductive composition according to any one of [1] to [4] above, wherein a content of the filler is 30.0% by mass or more and 99.8% by mass or less, and a content of the polymer component is 0.2% by mass or more and 70.0% by mass or less, based on a total amount of the thermally conductive composition.

[6] The thermally conductive composition according to any one of [1] to [5] above, wherein a restorability calculated from the following expression (i) is 85% or less:

$$\text{Restorability (\%)} = (T_A - T_B)/(T_A - T_C) \times 100 \qquad \text{(i)}$$

wherein $T_A$ is an original thickness (mm) of a test piece made of a cured product of the thermally conductive composition, $T_B$ is a thickness (mm) of the test piece after exposure at a temperature of 120°C for 24 hours in a state in which the test piece is compressed by 30% of the original thickness, and Tc is a thickness (mm) of a spacer of a compression apparatus.

[7] The thermally conductive composition according to any one of [1] to [6] above, wherein a hardness increase rate calculated from the following expression (ii) is 50% or less:

$$\text{Hardness increase rate (\%)} = (S_A - S_0)/S_0 \times 100 \qquad \text{(ii)}$$

wherein $S_0$ is an initial hardness of a test piece made of a cured product of the thermally conductive composition, and $S_A$ is a hardness of the test piece after exposure at a temperature of 130°C or 200°C for 168 hours.

[8] A cured product of the thermally conductive composition according to any one of [1] to [7] above.

[9] The cured product according to [8] above, wherein a thermal conductivity is 1.0 W/m●K or more.

## Advantageous Effects of Invention

According to the present invention, it is possible to provide a thermally conductive composition that has a moderate reaction rate and can allow a cured product having a high thermally conductive property, excellent heat resistance, a moderate hardness, and excellent restorability to be obtained.

## Description of Embodiment

Hereinafter, the present invention will be described in detail with reference to one embodiment.

As used herein, "2 to 20 carbon atoms" of the "alkyl group having 2 to 20 carbon atoms having a substituent" represents the number of carbon atoms in the unsubstituted alkyl group, and does not include the number of carbon atoms in the substituent. Similarly, "2 to 20 carbon atoms" of the "α-olefin having 2 to 20 carbon atoms having a substituent" represents the number of carbon atoms in the unsubstituted α-olefin, and does not include the number of carbon atoms in the substituent.

In addition, the "number of a hydroxyl group" means the average number of a hydroxyl group included in one molecule of a castor oil-based polyol. In addition, "castor oil-based" means a natural oil or fat or a processed product of a natural oil or fat including a triester compound of ricinoleic acid and glycerin, or a synthetic oil or fat including a synthetically obtained triester compound. The "castor oil-based polyol" means an ester compound of ricinoleic acid and/or hydrogenated ricinoleic acid and a polyhydric alcohol. The ester compound may be a compound obtained by modification using castor oil obtained by squeezing a seed of a castor oil plant (scientific name: Ricinus communis L.) or a derivative thereof as a starting material, or may be a polyol obtained by using a material other than castor oil as a starting material.

### <Thermally conductive composition>

The thermally conductive composition of the present embodiment includes a filler and a polymer component, and the filler includes at least one surface-treated filler selected from the group consisting of the following filler (A) and filler (B).

Filler (A): A filler surface-treated by a chemical vapor deposition method using a siloxane having one SiH group
Filler (B): A filler surface-treated by a chemical vapor deposition method using a siloxane having two or more SiH groups, wherein at least one group selected from the group consisting of an unsubstituted alkyl group having 6 to 20 carbon atoms, an alkyl group having 2 to 20 carbon atoms having a substituent, and a group represented by the following general formula (I) is further bonded to a silicon atom on a surface of the filler and introduced

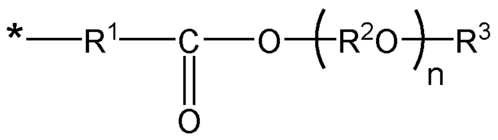

(I)

wherein $R^1$ and $R^2$ are each independently an alkylene group having 2 to 6 carbon atoms, and $R^3$ is an alkyl group having 1 to 3 carbon atoms; when a plurality of $R^2$ are present, the plurality of $R^2$ are identical to or different from each other; n is an integer of 1 to 9; and * represents a point of attachment to a silicon atom.

The thermally conductive composition of the present embodiment includes at least one surface-treated filler selected from the group consisting of the filler (A) and the filler (B) as a filler, and thus has a moderate reaction rate and can allow a cured product having a high thermally conductive property, excellent heat resistance, a moderate hardness, and excellent restorability to be obtained.

[Filler]

The filler used in the present embodiment includes at least one surface-treated filler selected from the group consisting of the filler (A) and the filler (B). As will be described later, the filler may include a further filler other than the filler (A) and the filler (B) as long as the advantageous effects of the present invention are not impaired. The further filler may or may not be surface-treated. As used herein, the term "filler" refers to one that is not surface-treated.

The thermal conductivity of the filler is preferably 0.5 W/m●K or more, and more preferably 1 W/m●K or more, from the viewpoint of imparting a thermally conductive property.

Examples of the filler include a metal; silicon; an oxide, a nitride, a carbide, a hydroxide, a fluoride, and a carbonate of a metal, silicon, or boron; and a carbon.

Examples of the metal include silver, gold, copper, iron, tungsten, stainless steel, aluminum, and carbonyl iron, and those that can be easily handled in the air are preferably used.

Examples of the oxide include zinc oxide, aluminum oxide, magnesium oxide, silicon oxide, titanium oxide, iron oxide, calcium oxide, and cerium oxide. In addition, a composite oxide is also used. In particular, the silicon oxide encompasses a natural product and a synthetic product, and specific examples thereof include smokeless silica, wet silica, dry silica, fused silica, quartz powder, silica sand, silica stone, and silicic anhydride. Examples of the composite oxide include spinel, perovskite, barium titanate, chrysoberyl, and ferrite.

Examples of the nitride include aluminum nitride, boron nitride, and silicon nitride.

Examples of the carbide include silicon carbide and boron carbide.

Examples of the hydroxide include aluminum hydroxide, magnesium hydroxide, iron hydroxide, cerium hydroxide, and copper hydroxide.

Examples of the fluoride include magnesium fluoride and calcium fluoride.

Examples of the carbonate include magnesium carbonate and calcium carbonate, and a composite carbonate salt such as dolomite is also used.

Examples of the carbon include graphite and carbon black.

These may be used singly or as a mixture of two or more.

The filler is preferably at least one selected from the group consisting of a metal, silicon, a metal oxide, a nitride, and a composite oxide, and more preferably a metal oxide, from the viewpoint of the various particle sizes, the various shapes, the price, and the availability.

In addition, in consideration of the balance between thermal conductivity and cost, aluminum oxide (alumina) is preferable, and α-alumina is particularly preferable because of the high thermally conductive property thereof. From the viewpoint of the high thermally conductive property, aluminum nitride and boron nitride are suitably used, and from the viewpoint of the low cost, silica, quartz powder, and aluminum hydroxide are suitably used.

The shape of the filler is not particularly limited as long as it is particulate, and examples thereof include a truly spherical shape, a spherical shape, a rounded shape, a flaky shape, a crushed shape, and a fibrous shape. These may be used in combination.

The filler preferably has a specific surface area of 0.05 $m^2/g$ or more and 10.0 $m^2/g$ or less, more preferably

0.06 $m^2/g$ or more and 9.0 $m^2/g$ or less, and further preferably 0.08 $m^2/g$ or more and 8.0 $m^2/g$ or less, as determined by the BET method. When the specific surface area is 0.05 $m^2/g$ or more, high filling with the filler is possible and the thermally conductive property can be improved, and when the specific surface area is 10.0 $m^2/g$ or less, the cohesiveness of the thermally conductive composition can be improved.

The specific surface area of the filler can be measured by a BET one-point method based on nitrogen adsorption using a specific surface area measuring apparatus, and can be measured specifically by the method described in the Examples.

The average particle size of the filler is preferably 0.001 μm or more and 200 μm or less, more preferably 0.005 μm or more and 180 μm or less, further preferably 0.01 μm or more and 150 μm or less, and more further preferably 0.05 μm or more and 100 μm or less. When the average particle size of the filler is 0.001 μm or more, it is easy to fill the polymer therewith and an improvement in thermal conductivity can be expected accordingly, and when the average particle size thereof is 200 μm or less, the thickness (BLT (bond line thickness)) of the heat dissipating material can be reduced.

As the filler, fillers each having a different particle size may be used in combination as long as the average particle size is within the above range.

As used herein, the "average particle size" refers to the volume average particle size, and can be determined from the particle size at which the cumulative volume is 50% (50% particle size D50) in a particle size distribution obtained by measurement using a laser diffraction particle size distribution measuring apparatus.

The filler may be in advance subjected to another surface treatment such as water resistance treatment or fluidity improvement. A surface treatment such as water resistance treatment or fluidity improvement may be applied to the entire surface of the filler, or may be applied to a part of the surface thereof. Examples of the surface-treated filler include a filler obtained by uniformly applying a nanoparticle of graphene or the like to aluminum nitride, a filler obtained by uniformly applying silica to a ceramics filler, and a film-formed filler obtained by creating a silicon oxide film on the surface of aluminum nitride or the like using a sol-gel method or water glass to impart water resistance and insulation performance.

[Filler (A)]

The filler surface of the filler (A) is surface-treated by a chemical vapor deposition method using a siloxane having one SiH group.

The filler surface has a functional group such as a hydroxyl group, the functional group and the SiH group of the siloxane are easily chemically bonded to each other by the chemical vapor deposition method, the siloxane is immobilized on the filler surface, and a group based on the siloxane is introduced to the filler surface.

As the filler to be surface-treated by a chemical vapor deposition method, those described in the section [Filler] can be used. When a filler subjected to a surface treatment such as water resistance treatment or fluidity improvement as the filler is used, the surface treatment is preferably applied to a part of the surface of the filler.

The rate of introduction of the group based on the siloxane to be introduced to the surface of the filler is preferably 0.01 to 1.0% by mass, more preferably 0.01 to 0.8% by mass, and further preferably 0.01 to 0.6% by mass, from the viewpoint of the viscosity or the consistency of the composition before curing.

The rate of introduction of the group based on the siloxane can be measured by a method according to JIS R1675:2007 "Combustion (high-frequency heating) - infrared absorption method." The rate of introduction can be measured specifically by the method described in the Examples.

Examples of the siloxane having one SiH group used for a surface treatment of a filler include benzyldimethylsilane, tert-butyldimethylsilane, 1, 1, 1,3,3-pentamethyldisiloxane, and 1,1,1,3,5,5,5-heptamethyltrisiloxane (MDHM). Among these, MDHM is preferable from the viewpoint of the boiling point and the availability. These may be used singly or as a mixture of two or more.

The chemical vapor deposition (CVD) method is a method for depositing a film of a raw material gas including a target component of a thin film on a substrate by a chemical reaction on a substrate surface or in a vapor phase. A surface treatment may be carried out by a chemical vapor deposition method while pressurizing, decompressing, or generating plasma depending on the target component.

When the siloxane having one SiH group is a gas, a film of the siloxane is directly formed on the surface of the filler, and when the siloxane is a liquid, the siloxane is vaporized to form a film of the siloxane on the surface of the filler.

Specifically, the chemical vapor deposition method is carried out by placing a container containing a siloxane having one SiH group and a container in which a filler is left to stand together in a heating apparatus such as an oven and heating the same at a predetermined temperature. The filler can be surface-treated by vaporizing the siloxane having one SiH group by heating and causing diffusion thereof in, adsorption thereof on, and a chemical reaction thereof with the filler. Alternatively, the filler can also be surface-treated by heating the siloxane having one SiH group, bringing an inert gas as a carrier gas to the filler, and causing diffusion, adsorption, and a chemical reaction.

The filler to be surface-treated by a chemical vapor deposition method is preferably stored in a constant temperature and humidity bath in order to keep the number of a functional group such as a hydroxyl group on the surface constant. Storage conditions are preferably a temperature range of 15°C or more and 35°C or less and a humidity range of 30% RH or more and 80% RH or less.

The heating temperature in the chemical vapor deposition method is preferably 40°C or more and 120°C or less, and more preferably 40°C or more and 100°C or less, although the heating temperature varies depending on the siloxane used. In addition, it is also preferable to heat a pipe for introducing a gas. The heating time is preferably 2 hours or more and 10 hours or less, and more preferably 4 hours or more and 8 hours or less.

The chemical vapor deposition method is a gaseous treatment, and thus a siloxane that does not participate in the reaction does not remain in the filler, the siloxane has a strong chemical bond with a hydroxyl group (active site) of the filler, and the active site has almost disappeared. Heating under reduced pressure may be carried out in order to remove the excess siloxane that remains. In addition, the siloxane that has not participated in the reaction can be recovered and reused.

As a treatment apparatus for the chemical vapor deposition method, an apparatus that can carry out stirring such as a kneader, a planetary mixer, a Henschel mixer, a Nauta mixer, a high-speed mixer, or a fluidized bed dryer can be used. These are favorably those that can be heated, and hydrogen is generated by the reaction, and thus these are preferably explosion-proof.

In addition, the surface treatment by the chemical vapor deposition method can also be carried out by placing a filler in a stainless vat, leaving the same to stand in a heated oven, and causing siloxane gas to flow. This method is particularly preferable because for this method, fillers each having a different particle size and a different chemical species can also be treated at the same time, and further, it is possible to prevent coloring due to the abrasion of the container and a stirring blade caused by the filler, which is a concern in the stirring in a rotation system.

[Filler (B)]

The filler (B) is a filler surface-treated by a chemical vapor deposition method using a siloxane having two or more SiH groups, wherein at least one group selected from the group consisting of an unsubstituted alkyl group having 6 to 20 carbon atoms, an alkyl group having 2 to 20 carbon atoms having a substituent, and a group represented by the following general formula (I) is further bonded to a silicon atom on a surface of the filler and introduced.

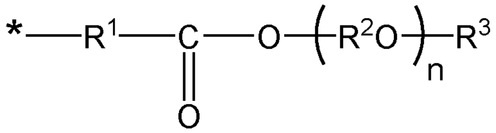 (I)

wherein $R^1$ and $R^2$ are each independently an alkylene group having 2 to 6 carbon atoms, and $R^3$ is an alkyl group having 1 to 3 carbon atoms; when a plurality of $R^2$ are present, the plurality of $R^2$ are identical to or different from each other; n is an integer of 1 to 9; and * represents a point of attachment to a silicon atom.

As the filler to be surface-treated by a chemical vapor deposition method, those described in the section [Filler] can be used. In addition, the surface treatment by a chemical vapor deposition method is as described in the section [Filler (A)].

The siloxane used for the surface treatment of the filler is not particularly limited as long as the siloxane has two or more SiH groups, and the siloxane has preferably two or more SiH groups and eight or less SiH groups, and more preferably two or more SiH groups and four or less SiH groups, from the viewpoint of the boiling point of a raw material, which will be described later, the number of a functional group to be introduced, and the availability. When the siloxane has a SiH group within the above range, moderate thixotropy is imparted to the composition.

Examples of the siloxane having two or more SiH groups include 1,3,5,7-tetramethylcyclotetrasiloxane (D4H), 1,3,5,7,9-pentamethylcyclopentasiloxane (D5H), 1,1,3,3-tetramethyldisiloxane (TMDO), 1,1,3,3,5,5-hexamethyltrisiloxane, 1,1,1,3,5,7,7,7-octamethyltetrasiloxane, 1,1,3,3,5,5,7,7-octamethyltetrasiloxane, 1,1,3,3,5,5,7,7,9,9,11,11-dodecamethylhexasiloxane, 1,3,3,5,5,7,7,9,9,11,11,13,13-tetradecamethylheptasiloxane, and 1,1,5,5-tetramethyl-3,3-diphenyltrisiloxane. Among these, D4H and TMDO are preferable from the viewpoint of the boiling point of a raw material, which will be described later, and the availability. These may be used singly or as a mixture of two or more.

When a siloxane having two or more SiH groups is used for a surface treatment of a filler by a chemical vapor deposition method, an unreacted SiH group is present on the surface of the filler. The unreacted SiH group is utilized to introduce at least one group selected from the group consisting of an unsubstituted alkyl group having 6 to 20 carbon atoms, an alkyl group having 2 to 20 carbon atoms having a substituent, and a group represented by the general formula (I). The group to be introduced to the surface of the filler is preferably a group represented by the general formula (I)

from the viewpoint of further reducing the hardness.

The unsubstituted alkyl group having 6 to 20 carbon atoms may be a linear alkyl group, a branched alkyl group, or a cyclic alkyl group, and is preferably a linear alkyl group. The number of carbon atoms in the alkyl group is preferably 6 to 18, and more preferably 6 to 12.

Examples of the alkyl group include a hexyl group, a heptyl group, an octyl group, a decyl group, and a dodecyl group. Among these, a decyl group is preferable from the viewpoint of the boiling point of a raw material, which will be described later, and the compatibility with a polymer. These may be one or may be two or more.

The alkyl group having 2 to 20 carbon atoms having a substituent may be a linear alkyl group or a branched alkyl group, and is preferably a linear alkyl group. The number of carbon atoms in the alkyl group is preferably 2 to 18, and more preferably 2 to 12.

Examples of the alkyl group include an ethyl group, a n-propyl group, an isopropyl group, a n-butyl group, an isobutyl group, a tert-butyl group, a pentyl group, a hexyl group, an octyl group, a decyl group, a dodecyl group, a tetradecyl group, a hexadecyl group, and an octadecyl group. Among these, a hexyl group, an octyl group, and a decyl group are preferable, and a decyl group is more preferable, from the viewpoint of the boiling point of a raw material, which will be described later, and the compatibility with a polymer. These may be one or may be two or more.

Examples of the substituent that the alkyl group has include a polyether group.

Examples of the polyether group include a polyethyleneoxy group $(C_2H_4O)_x$ wherein x is an integer of 1 to 4, a polypropyleneoxy group $(C_3H_6O)_y$ wherein y is an integer of 1 to 4, and a polyalkyleneoxy group in which an ethyleneoxy group (EO) and a propyleneoxy group (PO) are added in the form of a block or randomly.

In the group represented by the general formula (I), $R^1$ and $R^2$ are each independently an alkylene group having 2 to 6 carbon atoms, and $R^3$ is an alkyl group having 1 to 3 carbon atoms. When a plurality of $R^2$ are present, the plurality of $R^2$ are identical to or different from each other. n is an integer of 1 to 9. * represents a point of attachment to a silicon atom.

The alkylene group having 2 to 6 carbon atoms of the $R^1$ and the $R^2$ is preferably an alkylene group having 2 to 4 carbon atoms, and more preferably an alkylene group having 2 to 3 carbon atoms. Examples of the alkylene group include an ethylene group, a n-propylene group, a n-butylene group, and a n-hexylene group. Among these, an ethylene group is preferable from the viewpoint of the boiling point and the availability of a raw material, which will be described later.

Examples of the alkyl group having 1 to 3 carbon atoms of the $R^3$ include a methyl group, an ethyl group, a n-propyl group, and an isopropyl group. Among these, a methyl group or an ethyl group is preferable from the viewpoint of the boiling point and the availability of a raw material, which will be described later.

The n is an integer of 1 to 9, preferably an integer of 1 to 4, and more preferably an integer of 1 to 3.

The number of carbon atoms in the group to be introduced to the filler is preferably selected as appropriate according to the intended use of the thermally conductive composition. For example, the group to be introduced to the filler may be a combination of a group represented by the general formula (I) and an unsubstituted alkyl group having 6 to 20 carbon atoms, or may be a combination of a group represented by the general formula (I) and an alkyl groups having 2 to 20 carbon atoms having a substituent.

In addition, a polymer component is easily filled with a filler to which a group having a large number of carbon atoms is introduced and a composition including the polymer component has high thixotropy and thus can be suitably used for an adhesive or the like.

The method for introducing at least one group selected from the group consisting of an unsubstituted alkyl group having 6 to 20 carbon atoms, an alkyl group having 2 to 20 carbon atoms having a substituent, and a group represented by the general formula (I) to the filler is not particularly limited, and for example, the unsubstituted alkyl group having 6 to 20 carbon atoms can be introduced by a hydrosilylation reaction between a SiH group present on the surface of the filler and an unsubstituted $\alpha$-olefin having 6 to 20 carbon atoms. In addition, the alkyl group having 2 to 20 carbon atoms having a substituent can be introduced by a hydrosilylation reaction between a SiH group present on the surface of the filler and an $\alpha$-olefin having 2 to 20 carbon atoms having a substituent, and the group represented by the general formula (I) can be introduced by a hydrosilylation reaction between a SiH group present on the surface of the filler and a monofunctional (meth)acrylate having an oxyalkylene group.

The unsubstituted $\alpha$-olefin having 6 to 20 carbon atoms may be a linear olefin or a branched olefin, and is preferably a linear olefin. The unsubstituted $\alpha$-olefin having 6 to 20 carbon atoms is preferably an $\alpha$-olefin having 6 to 18 carbon atoms, and more preferably an $\alpha$-olefin having 6 to 12 carbon atoms.

Examples of the unsubstituted $\alpha$-olefin having 6 to 20 carbon atoms include 1-hexene, 1-heptene, 1-octene, 1-decene, 1-dodecene, vinylcyclohexane, and allylcyclohexane. Among these, 1-decene is preferable from the viewpoint of the boiling point and the compatibility with a polymer. These may be used singly or as a mixture of two or more.

The $\alpha$-olefin having 2 to 20 carbon atoms having a substituent may be a linear olefin or a branched olefin, and is preferably a linear olefin. The $\alpha$-olefin having 2 to 20 carbon atoms having a substituent is preferably an $\alpha$-olefin having 2 to 18 carbon atoms, and more preferably an $\alpha$-olefin having 2 to 12 carbon atoms.

Examples of the $\alpha$-olefins having 2 to 20 carbon atoms include ethylene, propylene, 1-butene, isobutene, 1-pentene, 1-hexene, 1-octene, 1-decene, 1-dodecene, 1-tetradecene, 1-hexadecene, 1-octadecene, vinylcyclohexane,

and allylcyclohexane. Among these, 1-decene is preferable from the viewpoint of the boiling point and the compatibility with a polymer. These may be used singly or as a mixture of two or more.

Examples of the substituent include a polyether group.

Examples of the polyether group include a polyethyleneoxy group $(C_2H_4O)_x$ wherein x is an integer of 1 to 4, a polypropyleneoxy group $(C_3H_6O)_y$ wherein y is an integer of 1 to 4, and a polyalkyleneoxy group in which an ethyleneoxy group (EO) and a propyleneoxy group (PO) are added in the form of a block or randomly.

Examples of the monofunctional (meth)acrylate having an oxyalkylene group include methoxy-triethylene glycol acrylate, ethoxy-diethylene glycol acrylate, and methoxy-tripropylene glycol acrylate. Among these, ethoxy-diethylene glycol acrylate is preferable from the viewpoint of the boiling point and the compatibility with a polymer. These may be used singly or as a mixture of two or more.

In the hydrosilylation reaction, a SiH group and a vinyl group are reacted in the presence of a platinum catalyst.

The hydrosilylation reaction is carried out preferably under conditions of a temperature of 25°C or more and 150°C or less and a period of 5 minutes or more and 24 hours or less, and more preferably under conditions of a temperature of 70°C or more and 130°C or less and a period of 30 minutes or more and 2 hours or less.

The rate of introduction of at least one group selected from the group consisting of an unsubstituted alkyl group having 6 to 20 carbon atoms, an alkyl group having 2 to 20 carbon atoms having a substituent, and a group represented by the general formula (I) to be introduced to the surface of the filler is preferably 0.01 to 1.0% by mass, more preferably 0.02 to 0.8% by mass, and further preferably 0.02 to 0.6% by mass, from the viewpoint of the viscosity or the consistency of the composition before curing.

The rate of introduction can be measured by a method according to JIS R1675:2007 "Combustion (high-frequency heating) - infrared absorption method." The rate of introduction can be measured specifically by the method described in the Examples.

Neither the filler (A) nor the filler (B) has a functional group such as a SiH group on the surface, and thus reacts with the polymer component, which will be described later. Therefore, the thermally conductive composition of the present embodiment includes at least one surface-treated filler selected from the group consisting of the filler (A) and the filler (B) as a filler, and thus has a moderate reaction rate and can allow a cured product having a high thermally conductive property, excellent heat resistance, a moderate hardness, and excellent restorability to be obtained.

For a silane coupling agent and a silane agent having a trialkoxy group, which are each conventionally used as a surface treatment agent, when the trialkoxy group does not participate in polymerization or polymer film formation and when a resin is filled with a remaining filler having a trialkoxy group (trialkoxy group-containing filler), the trialkoxy group-containing filler causes a reaction of the polymerization or the polymer film formation of the thermally conductive composition to proceed because of the thermal history of the thermally conductive composition, and affects a physical property such as hardness, compression set, tensile strength, elongation, tear strength, or heat resistance of the cured product. In addition thereto, the curing reaction proceeds too much after long-term use such as the remaining trialkoxy group dissolving the surface of a metal such as aluminum, which may cause a problem such as aluminum sticking too strongly to each other and being unable to be removed.

When at least one surface-treated filler selected from the group consisting of the filler (A) and the filler (B) in the present embodiment is used, the influence of a residual group of the surface treatment agent can be greatly reduced, and the hardness, the compression set, and the heat resistance of the cured product can be improved. Further, a physical property such as tensile strength, elongation, and tear strength can also be improved.

The total content of the filler (A) and the filler (B) included in the filler is preferably 30% by mass or more and 100% by mass or less, more preferably 35% by mass or more and 90% by mass or less, and further preferably 40% by mass or more and 80% by mass or less. When the total content of the filler (A) and the filler (B) is within the above range, the hardness of the cured product can be lowered. In addition, when the total content of the filler (A) and the filler (B) is 30% by mass or more, the viscosity of the composition can be lowered.

The filler may include a non-surface-treated filler, in addition to at least one surface-treated filler selected from the group consisting of the filler (A) and the filler (B). The non-surface-treated filler is preferably aluminum oxide from the viewpoint of the high thermally conductive property.

When the filler contains the non-surface-treated filler, the content thereof is preferably 10% by mass or more and 85% by mass or less, and more preferably 20% by mass or more and 80% by mass or less. When the content of the non-surface-treated filler is within the above range, hydrolysis resistance and heat resistance can be imparted.

The filler may include a filler treated with a surface treatment agent other than the surface treatment agents used in the (A) filler and the (B) filler (hereinafter, also referred to as another surface treatment agent). Examples of the another surface treatment agent include a silane coupling agent (silane agent), a titanium coupling agent, an aluminum coupling agent, a fatty acid, a fatty acid ester, a higher alcohol, a silicone oil, a fluorine oil, a dispersant, and a surfactant. Any of such surface treatment agents may be used as the another surface treatment agent as long as it does not affect the cured form and physical properties and does not interfere with the advantageous effects of the present invention.

In addition, the filler may include a filler having a single vinyl-terminated polysiloxane (single vinyl-terminated

silicone) introduced. The filler having a single vinyl-terminated polysiloxane introduced has excellent compatibility with silicone, and thus may be used when silicone is used as the polymer component, which will be described later.

When the filler includes a filler having a single vinyl-terminated polysiloxane introduced, the content thereof is preferably 60% by mass or less, more preferably 50% by mass or less, and further preferably 40% by mass or less, based on the total amount of the filler.

The content of the filler is preferably 30.0% by mass or more and 99.8% by mass or less, more preferably 50.0% by mass or more and 99.5% by mass or less, further preferably 60.0% by mass or more and 99.0% by mass or less, and more further preferably 70.0% by mass or more and 95.0% by mass or less, based on the total amount of the thermally conductive composition of the present embodiment. When the content of the filler is 30.0% by mass or more, a high thermal conductivity can be imparted, and when the content thereof is 99.8% by mass or less, the fluidity of the composition can be secured, and the composition can be made hard enough to be molded.

[Polymer Component]

The polymer component used in the present embodiment is not particularly limited, and examples thereof include a thermosetting resin, a thermoplastic resin, an elastomer, and an oil. These may be used singly or as a mixture of two or more.

The polymer component is preferably at least one selected from the group consisting of a thermosetting resin, an elastomer, and an oil from the viewpoint of obtaining the advantageous effects of the present invention. The thermosetting resin means one in a state before curing, and as used herein, the thermosetting resin is not limited to a heat-curable type and also encompasses a normal-temperature curable type.

Examples of the thermosetting resin include an epoxy resin, a phenol resin, an unsaturated polyester resin, a melamine resin, a urea resin, polyimide, and polyurethane.

Examples of the thermoplastic resin include a polyolefin such as polyethylene or polypropylene; polyester, nylon, ABS resin, methacrylic resin, acrylic resin, polyphenylene sulfide, fluororesin, polysulfone, polyetherimide, polyethersulfone, polyetherketone, liquid crystal polyester, thermoplastic polyimide, polylactic acid, and polycarbonate.

The thermosetting resin and the thermoplastic resin may be modified with silicone or modified with fluororesin. Specific examples of the modified resin include a silicone-modified acrylic resin and a fluororesin-modified polyurethane.

Examples of the elastomer include natural rubber, isoprene rubber, butadiene rubber, 1,2-polybutadiene, styrene-butadiene, chloroprene rubber, nitrile rubber, butyl rubber, ethylene-propylene rubber (EPM, EPDM), chlorosulfonated polyethylene, acrylic rubber, epichlorohydrin rubber, polysulfide rubber, silicone rubber, fluororubber, and polyurethane rubber.

Examples of the oil include a low-molecular-weight poly-$\alpha$-olefin, a low-molecular-weight polybutene, a silicone oil, and a fluorine oil.

These may be used singly or as a mixture of two or more.

The polymer component is preferably polyurethane, silicone rubber, or a silicone oil from the viewpoint of the availability of a low-viscosity product.

As the polymer component, one having a viscosity at 25°C of 30 mPa●s or more and 3000 mPa●s or less is preferably used, and one having a viscosity at 25°C of 50 mPa●s or more and 2800 mPa●s or less is more preferably used. When the viscosity is 30 mPa●s or more, the thermal stability is excellent, and when the viscosity is 3000 mPa●s or less, the viscosity of the composition can be lowered or the consistency can be increased.

The viscosity at 25°C of the polymer component can be measured using a rotational viscometer (for example, manufactured by Toki Sangyo Co., Ltd., trade name: TVB-10, rotor No. 3) under a condition of a rotational speed of 20 rpm according to JIS Z8803:2011.

The content of the polymer component is preferably 0.2% by mass or more and 70.0% by mass or less, more preferably 0.5% by mass or more and 50.0% by mass or less, further preferably 1.0% by mass or more and 40.0% by mass or less, and more further preferably 2.0% by mass or more and 30.0% by mass or less, based on the total amount of the thermally conductive composition of the present embodiment. When the content of the polymer component is 0.2% by mass or more, a thermally conductive property can be imparted, and when the content thereof is 70.0% by mass or less, the hardness of the cured product and the viscosity of the composition can be made appropriate.

By using the filler (A) and the filler (B), a resin that has so far been unable to be used as a polymer component of a thermally conductive composition can be used. Examples of such a resin include a condensation type silicone and an alkoxysilyl-containing polyurethane.

The condensation type silicone is a system that is composed of a hydroxyl group-terminated polysiloxane, a silane agent or a silane coupling agent as a crosslinking agent, and a metal complex and cured when these three are mixed in the presence of water. There is the following problem: the reaction rate and the hardness of the cured product cannot be controlled when a filler treated with a conventionally used silane agent is added to the system. In contrast, in the present embodiment, by adding at least one surface-treated filler selected from the group consisting of the filler (A)

and the filler (B) to the three components, the reaction rate can be controlled and also the hardness of the resulting cured product can be controlled.

In addition, in the case of an alkoxysilyl-containing polyurethane, a metal complex may be added as an accelerator. The metal complex reacts with a trialkoxy group of a silane agent or a silane coupling agent, and thus there is the following problem: the reaction rate and the hardness of the cured product cannot be controlled. In contrast, in the present embodiment, by using at least one surface-treated filler selected from the group consisting of the filler (A) and the filler (B) instead of the silane coupling agent, the reaction rate can be controlled and also the hardness of the resulting cured product can be controlled.

As described above, at least one surface-treated filler selected from the group consisting of the filler (A) and the filler (B) is suitably used when there is a contradiction in the curing system in the system.

In addition, the filler (A) and the filler (B) have remaining SiH removed in a surface treatment step, and thus can also be used for a curable resin that uses a hydrosilylation reaction. Examples of the curable resin include a vinyl group-containing silicone or acrylic. The surface of the filler is covered with the above specific siloxane, and thus the activity of the filler is lowered, which prevents the deactivation of a platinum catalyst and also has the action of reducing the deactivation of Si of the crosslinking agent. Further, the surface of the filler is covered with the above specific siloxane, and thus the interfacial energy of a resin other than silicone and fluororesin is reduced, and the fluidity of the composition is improved.

In addition to each of the components described above, an additive such as a heat-resistant agent, a flame retardant, a plasticizer, a silane coupling agent, a dispersant, or a reaction accelerator can be blended as needed into the thermally conductive composition of the present embodiment as long as the additive does not affect the cured form and physical properties and does not interfere with the advantageous effects of the present invention.

When such additives are used, the amount of each thereof added is preferably 0.05% by mass or more and 20.0% by mass or less, more preferably 0.10% by mass or more and 20.0% by mass or less, and further preferably 0.14% by mass or more and 17.0% by mass or less, based on the total amount of the thermally conductive composition.

The total content of the filler and the polymer component in the thermally conductive composition of the present embodiment is preferably 85 to 100% by mass, more preferably 90 to 100% by mass, and further preferably is 92 to 100% by mass.

The thermally conductive composition of the present embodiment can be obtained by feeding the filler, the polymer component, and another additive to a stirring apparatus and stirring and kneading these. The stirring apparatus is not particularly limited, and examples thereof include a twin roll, a kneader, a planetary mixer, a high-speed mixer, and a rotation/revolution stirrer.

The thermally conductive composition of the present embodiment has a viscosity at 30°C of preferably 80 Pa●s or more and 1000 Pa●s or less, more preferably 100 Pa●s or more and 500 Pa●s or less, and further preferably 120 Pa●s or more and 250 Pa●s or less.

The viscosity can be measured by a method according to JIS K7210:2014 using a flow viscometer and can be measured specifically by the method described in the Examples.

The thermally conductive composition of the present embodiment has a consistency at 23°C of preferably 30 or more and 450 or less, more preferably 40 or more and 420 or less, further preferably 50 or more and 390 or less, more further preferably 100 or more and 385 or less, more further preferably 150 or more and 380 or less, and more further preferably 200 or more and 380 or less.

As used herein, the consistency is an index indicating the flexibility of the thermally conductive composition, showing that the larger the value thereof, the softer the thermally conductive composition. When the consistency of the thermally conductive composition is within the above range, the thermally conductive composition has excellent flexibility.

The consistency can be measured by a method according to JIS K2220:2013 and can be measured specifically by the method described in the Examples.

The thermally conductive composition of the present embodiment has a moderate reaction rate and can allow a cured product having a high thermally conductive property, excellent heat resistance, a moderate hardness, and excellent restorability to be obtained, and thus can be suitably used for a heatgenerating electronic part such as an electronic device, a personal computer, or an automobile ECU or battery.

<Cured product of thermally conductive composition>

A cured product of the thermally conductive composition of the present embodiment can be obtained, for example, by injecting the thermally conductive composition into a mold or the like, drying the same as needed, and then heatcuring the same. In addition, when the polymer component is a normal-temperature curable type, the thermally conductive composition may be cured by being left at a temperature of 20 to 25°C for about 5 days to 10 days.

The drying may be carried out at normal temperature or be natural drying. The heating is preferably carried out under conditions of a temperature of 50°C or more and 150°C or less and a period of 5 minutes or more and 20 hours

or less, and more preferably under conditions of a temperature of 60°C or more and 100°C or less and a period of 10 minutes or more and 10 hours or less.

The cured product of the thermally conductive composition of the present embodiment has a thermal conductivity of preferably 1.0 W/m●K or more, more preferably 1.5 W/m●K or more, and further preferably 2.0 W/m●K or more.

The thermal conductivity can be measured by a method according to ISO 22007-2 and can be measured specifically by the method described in the Examples.

The cured product of the thermally conductive composition of the present embodiment has a C hardness of preferably 20 or more and 75 or less, more preferably 30 or more and 70 or less, further preferably 40 or more and 70 or less, and more further preferably 45 or more and 70 or less, as measured according to the hardness test (type C) of JIS K7312:1996. When the C hardness is within the above range, the cured product can have moderate hardness.

The C hardness can be measured specifically by the method described in the Examples.

The cured product of the thermally conductive composition of the present embodiment has an A hardness of preferably 20 or more and 85 or less, more preferably 30 or more and 85 or less, and further preferably 40 or more and 85 or less, as measured according to the hardness test (type A) of JIS K7312:1996. When the A hardness is within the above range, the cured product can have moderate hardness.

The A hardness can be measured specifically by the method described in the Examples.

The cured product of the thermally conductive composition of the present embodiment has a Shore 00 hardness of preferably 20 or more and 85 or less, more preferably 30 or more and 85 or less, and further preferably 40 or more and 85 or less, as measured according to ASTM D2240. When the Shore 00 is within the above range, the cured product can have moderate hardness.

The Shore 00 hardness can be measured specifically by the method described in the Examples.

The cured product of the thermally conductive composition of the present embodiment has a restorability of preferably 85% or less, more preferably 80% or less, and further preferably 75% or less, as calculated from the following expression (i).

$$\text{Restorability (\%)} = (T_A - T_B)/(T_A - T_C) \times 100 \qquad \text{(i)}$$

wherein $T_A$ is the original thickness (mm) of a test piece made of the cured product of the thermally conductive composition, $T_B$ is the thickness (mm) of the test piece after exposure at a temperature of 120°C for 24 hours in a state in which the test piece is compressed by 30% of the original thickness, and Tc is the thickness (mm) of a spacer of a compression apparatus.

The restorability shows that the smaller the numerical value thereof, the more the original thickness is restored. The restorability can be measured with reference to JIS K6301, and can be measured specifically by the method described in the Examples.

The cured product of the thermally conductive composition of the present embodiment has a hardness increase rate of preferably 50% or less, more preferably 40% or less, and further preferably 35% or less, as calculated from the following expression (ii). When the hardness increase rate is 50% or less, the heat resistance is excellent.

$$\text{Hardness increase rate (\%)} = (S_A - S_0)/S_0 \times 100 \qquad \text{(ii)}$$

wherein $S_0$ is the initial hardness of a test piece made of the cured product of the thermally conductive composition, and $S_A$ is the hardness of the test piece after exposure at a temperature of 130°C or 200°C for 168 hours.

When the thermally conductive composition includes silicone as a polymer component, a test piece made of the cured product of the thermally conductive composition is exposed at a temperature of 200°C for 168 hours, and when the thermally conductive composition includes no silicone as a polymer component, a test piece made of the cured product of the thermally conductive composition is exposed at a temperature of 130°C for 168 hours.

The hardness increase rate can be measured specifically by the method described in the Examples.

The cured product of the thermally conductive composition of the present embodiment has a hardness decrease rate of preferably 30% or less, more preferably 25% or less, and further preferably 20% or less, as calculated from the following expression (iii). When the hardness decrease rate is 30% or less, the hydrolysis resistance is excellent.

$$\text{Hardness decrease rate (\%)} = (S_B - S_0)/S_0 \times 100 \qquad \text{(iii)}$$

wherein $S_0$ is the initial hardness of a test piece made of the cured product of the thermally conductive composition, and $S_B$ is the hardness of the test piece after a PCT test.

The PCT test (pressure cooker test) is carried out using a PCT tester (for example, autoclave) under conditions of a temperature of 120 to 125°C and a pressure of $2.0 \times 10^5$ Pa.

The hardness decrease rate can be measured specifically by the method described in the Examples.

Examples

Next, the present invention will be specifically described by Examples, but the present invention is not limited by these Examples at all.

[Raw material compounds]

Details of the raw material compounds used in surface treatments 1 to 15, Examples 1 to 13, and Comparative Examples 1 to 10 are as follows.

[Fillers]

- Filler 1 (alumina): AES-12, manufactured by Sumitomo Chemical Co., Ltd., average particle size: 0.5 μm, specific surface area (BET method): 5.8 $m^2$/g, thermal conductivity: 25 W/m●K
- Filler 2 (alumina): BAK-5, manufactured by Shanghai Baitu Co., Ltd., average particle size: 5 μm, specific surface area (BET method): 0.4 $m^2$/g, thermal conductivity: 25 W/m●K
- Filler 3 (alumina): Alumina AL45H, manufactured by Showa Denko K.K., average particle size: 3.0 μm, specific surface area (BET method): 1.2 $m^2$/g, thermal conductivity: 25 W/m●K
- Filler 4 (alumina): ALUNABEADS (registered trademark) CB-A70, manufactured by Showa Denko K.K., average particle size: 70 μm, specific surface area (BET method): 0.1 $m^2$/g, thermal conductivity: 25 W/m●K
- Filler 5 (alumina): Roundish Alumina AS-05, manufactured by Showa Denko K.K., average particle size: 45 μm, specific surface area (BET method): 0.5 $m^2$/g, thermal conductivity: 25 W/m●K
- Filler 6 (alumina): ALUNABEADS (registered trademark) CB-A100S, manufactured by Showa Denko K.K., average particle size: 95 μm, specific surface area (BET method): 0.1 $m^2$/g, thermal conductivity: 25 W/m●K

The average particle size, the specific surface area, and the thermal conductivity of each of fillers 1 to 6 were measured by the following measurement methods.

(1) Average particle size

The average particle size was determined from the particle size (50% particle size D50) at which the cumulative volume is 50% in a particle size distribution obtained by measurement using a laser diffraction particle size distribution measuring apparatus (manufactured by MicrotracBEL Corp., trade name: MT3300EXII).

(2) Specific surface area

The specific surface area was measured by a BET one-point method based on nitrogen adsorption using a specific surface area measuring apparatus (manufactured by Mountech Co., Ltd., trade name: Macsorb MS30).

(3) Thermal conductivity

50 g of alumina was pulverized, then paraffin was added in an amount of 5% by mass of the alumina and kneaded, and the resulting kneaded product was placed in a mold having a diameter of 25 mm and a thickness of 8 mm and was molded by cold pressing. Next, the temperature was raised from room temperature (20°C) to 200°C over 1 hour in an electric furnace, and degreasing was carried out for 2 hours while maintaining the temperature at 200°C. Subsequently, the temperature was raised at a temperature increase rate of 400°C/hour, fired at 1580°C for 4 hours, and cooled by natural cooling for 4 hours or more to obtain a sintered body. The thermal conductivity of the obtained sintered body was measured according to ISO 22007-2 using a hot disk method thermophysical property measuring apparatus (manufactured by Kyoto Electronics Manufacturing Co., Ltd., trade name TPS 2500 S).

[Siloxane having one SiH group]

- 1, 1, 1,3,5,5,5-Heptamethyldisiloxane (MDHM), manufactured by Tokyo Chemical Industry Co., Ltd.

[Siloxane having two or more SiH groups]

- 1,3,5,7-Tetramethylcyclotetrasiloxane (D4H), number of SiH groups: 4, manufactured by Tokyo Chemical Industry Co., Ltd.
- 1,1,3,3-Tetramethyldisiloxane (TMDO), number of SiH groups: 2, manufactured by Tokyo Chemical Industry Co., Ltd.

[Alkene having 6 to 20 carbon atoms]

- 1-Decene: LINEALENE 10, manufactured by Idemitsu Kosan Co., Ltd. [Monofunctional (meth)acrylate having oxyalkylene group]
- Ethoxy-diethylene glycol acrylate: Light Acrylate EC-A, manufactured by Kyoeisha Chemical Co., Ltd.

[Polymer component]

- Addition type silicone 1: DOWSIL™ EG-3100 (vinyl group-containing dimethyl silicone rubber), manufactured by Dow Toray Co., Ltd., viscosity at 25°C: 320 mPa●s, thermal conductivity: 0.2 W/m●K
- Condensation type silicone 1: XP1480 (double hydroxyl group-terminated silicone oil), manufactured by JNC Corporation, weight average molecular weight: 10,000, viscosity at 25°C: 180 mPa●s, thermal conductivity: 0.2 W/m●K

  - Polyurethane (polyadduct of castor oil-based polyol 1 and polyisocyanate compound 1 below)

Castor oil-based polyol 1: manufactured by Ito Oil Chemicals Co., Ltd., hydroxyl value: 23.2 mgKOH/g, acid value: 3.3 mgKOH/g, viscosity at 25°C: 78 mPa●s, water content: 0.01% or less, number of hydroxyl groups: 2

Polyisocyanate compound 1: URIC N-2023 (isocyanate-terminated prepolymer), manufactured by Ito Oil Chemicals Co., Ltd., viscosity at 25°C: 2290 mPa●s, NCO content: 16% by mass

The hydroxyl value of castor oil-based polyol 1 was measured according to JIS K0070:1992.

The thermal conductivity of the polyurethane obtained from castor oil-based polyol 1 and polyisocyanate compound 1 is 0.3 W/m●K.

- Trimethoxysilyl group-containing polyurethane 1: SPUR+ 3030 PREPOLYMER, manufactured by Momentive Performance Materials Japan LLC, viscosity at 25°C: 2500 mPa●s, thermal conductivity: 0.3 W/m●K

The viscosity and the thermal conductivity of the polymer component were measured by the following measuring methods.

(1) Viscosity

The viscosity of the polymer component was measured at 25°C using a rotational viscometer (manufactured by Toki Sangyo Co., Ltd., trade name: TVB-10) based on JIS Z8803:2011 "Methods for viscosity measurement of liquid."

(2) Thermal conductivity

The thermal conductivity of the polymer component was measured according to ISO 22007-2 using a hot disk method thermophysical property measuring apparatus (manufactured by Kyoto Electronics Manufacturing Co., Ltd., trade name TPS 2500 S).

[Other components]

- Silane coupling agent 1: KBM-3063 (trimethoxyhexylsilane), manufactured by Shin-Etsu Chemical Co., Ltd.
- Silane coupling agent 2: KBM-3103C (decyltrimethoxysilane), manufactured by Shin-Etsu Chemical Co., Ltd.
- Metal complex 1: TC-750 (titanium ethyl acetoacetate), Matsumoto Fine Chemical Co., Ltd.
- Dispersant 1: EXP6496D (polyester compound), manufactured by DIC Corporation
- Plasticizer 1: RIC-CIZER C-401 (fatty acid ester derived from castor oil), manufactured by Ito Oil Chemicals Co., Ltd., viscosity at 25°C: 20 mPa●s

The fillers were surface-treated by the following surface treatments 1 to 15. Hydrogen gas was generated during the reaction between the siloxane compound and the hydroxyl group on the surface of the filler, and thus safety measures such as releasing the generated hydrogen gas through an open valve attached to a stainless container were taken to carry out the operation.

[Surface treatment 1: surface treatment by chemical vapor deposition method using MDHM]

A stainless steel container having an internal volume of 8 liters equipped with an open valve was provided, and a rack having meshed three shelves to fit in the container was provided. A glass petri dish containing 30 g of MDHM was placed on the bottom shelf of the rack, an aluminum container containing 100 g of filler 1 was left to stand on the top shelf thereof, and the rack was housed as it was in the stainless steel container having an internal volume of 8 liters. After that, the container was sealed and heated in an oven at 100°C for 7.5 hours to obtain a filler surface-treated by a chemical vapor deposition method using MDHM. The rate of introduction of a group based on MDHM was 0.24% by mass.

[Surface treatment 2: surface treatment by chemical vapor deposition method using MDHM]

A filler surface-treated by a chemical vapor deposition method using MDHM was obtained in the same manner as in surface treatment 1 except that filler 2 was used instead of filler 1. The rate of introduction of a group based on MDHM was 0.021% by mass.

[Surface treatment 3: surface treatment by chemical vapor deposition method using D4H + introduction of decyl group]

A stainless steel container having an internal volume of 8 liters equipped with an open valve was provided, and a rack having meshed three shelves to fit in the container was provided. A glass petri dish containing 30 g of D4H was placed on the bottom shelf of the rack, an aluminum container containing 100 g of filler 1 was left to stand on the top shelf thereof, and the rack was housed as it was in the stainless steel container having an internal volume of 8 liters. After that, the container was sealed and heated in an oven at 80°C for 7.5 hours to obtain a filler surface-treated by a chemical vapor deposition method using D4H.

Next, a mixture of 10 g of a 1% chloroplatinic acid ethanol solution and 20 g of 1-decene was added to 100 g of the surface-treated filler, the resulting mixture was stirred and mixed for 30 seconds at a rotational speed of 1000 rpm using a rotation/revolution mixing mixer (manufactured by THINKY Corporation, trade name: ARV-310P), then the operation of loosening the mixture was repeated four times, and the mixture was air-dried once. Next, the mixture was heated at a temperature of 120°C for 2 hours in a hot air circulation oven and then heated at a temperature of 120°C for 2 hours under reduced pressure (0.02 KPa or less) to remove excess 1-decene, and then the mixture was cooled to obtain a filler having 0.45% by mass of a decyl group introduced to the surface.

[Surface treatment 4: surface treatment by chemical vapor deposition method using D4H + introduction of decyl group]

A filler having 0.043% by mass of a decyl group introduced to the surface was obtained in the same manner as in surface treatment 3 except that filler 2 was used instead of filler 1.

[Surface treatment 5: surface treatment by chemical vapor deposition method using D4H]

A stainless steel container having an internal volume of 8 liters equipped with an open valve was provided, and a rack having meshed three shelves to fit in the container was provided. A glass petri dish containing 30 g of D4H was placed on the bottom shelf of the rack, an aluminum container containing 100 g of filler 1 was left to stand on the top shelf thereof, and the rack was housed as it was in the stainless steel container having an internal volume of 8 liters.

After that, the container was sealed and heated in an oven at 80°C for 7.5 hours to obtain a filler surface-treated by a chemical vapor deposition method using D4H. The rate of introduction of a group based on D4H was 0.67% by mass.

[Surface treatment 6: surface treatment by chemical vapor deposition method using D4H]

A filler surface-treated by a chemical vapor deposition method using D4H was obtained in the same manner as in surface treatment 5 except that filler 2 was used instead of filler 1. The rate of introduction of a group based on D4H was 0.061% by mass.

[Surface treatment 7: surface treatment by chemical vapor deposition method using TMDO]

A stainless steel container having an internal volume of 8 liters equipped with an open valve was provided, and a rack having meshed three shelves to fit in the container was provided. A glass petri dish containing 30 g of TMDO was placed on the bottom shelf of the rack, an aluminum container containing 100 g of filler 1 was left to stand on the top shelf thereof, and the rack was housed as it was in the stainless steel container having an internal volume of 8 liters. After that, the container was sealed and heated in an oven at 45°C for 7.5 hours to obtain a filler surface-treated by a chemical vapor deposition method using TMDO. The rate of introduction of a group based on TMDO was 0.33% by mass.

[Surface treatment 8: surface treatment by chemical vapor deposition method using TMDO]

A filler surface-treated by a chemical vapor deposition method using TMDO was obtained in the same manner as in surface treatment 7 except that filler 2 was used instead of filler 1. The rate of introduction of a group based on TMDO was 0.030% by mass.

[Surface treatment 9: surface treatment by direct method using decyltrimethoxysilane]

Decyltrimethoxysilane was weighed with the value of 100 g of filler 1 multiplied by the specific surface area of filler 1 and divided by the minimum coverage area of decyltrimethoxysilane (298 $m^2/g$) (1.95 g) as the content of decyltrimethoxysilane and was added, and ethanol was added in an amount of 5 g to 100 g of filler 1, further, water was added in an amount of half the value of 100 g of filler 1 multiplied by the specific surface area of filler 1 and divided by the minimum coverage area of decyltrimethoxysilane (0.97 g) to prepare an agent, the agent was added to filler 1, the resulting mixture was stirred and mixed for 30 seconds at a rotational speed of 1000 rpm using a rotation/revolution mixing mixer (manufactured by THINKY Corporation, trade name: ARV-310P), then the operation of loosening the mixture was repeated four times, and the mixture was air-dried once. Next, the mixture was heated at a temperature of 120°C for 2 hours in a hot air circulation oven and then cooled to obtain a filler surface-treated by a direct method using decyltrimethoxysilane.

[Surface treatment 10: surface treatment by direct method using decyltrimethoxysilane]

A filler surface-treated by a direct method using decyltrimethoxysilane was obtained in the same manner as in surface treatment 9 except that filler 2 was used instead of filler 1.

[Surface treatment 11: surface treatment by chemical vapor deposition method using MDHM]

A filler surface-treated by a chemical vapor deposition method using MDHM was obtained in the same manner as in surface treatment 1 except that filler 3 was used instead of filler 1. The rate of introduction of a group based on MDHM was 0.037% by mass.

[Surface treatment 12: surface treatment by chemical vapor deposition method using D4H + introduction of decyl group]

A filler having 0.071% by mass of a decyl group introduced to the surface was obtained in the same manner as in surface treatment 3 except that filler 3 was used instead of filler 1.

[Surface treatment 13: surface treatment by chemical vapor deposition method using TMDO + introduction of decyl group]

A filler surface-treated by a chemical vapor deposition method using TMDO was obtained in the same manner as in surface treatment 7 except that filler 3 was used instead of filler 1.

Next, a filler having 0.065% by mass of a decyl group introduced to the surface was obtained in the same

manner as in surface treatment 3 to 100 g of the surface-treated filler.

[Surface treatment 14: surface treatment by direct method using decyltrimethoxysilane]

A filler surface-treated by a direct method using decyltrimethoxysilane was obtained in the same manner as in surface treatment 9 except that filler 3 was used instead of filler 1.

[Surface treatment 15: surface treatment by chemical vapor deposition method using D4H + introduction of group represented by the following formula (1)]

A filler surface-treated by a chemical vapor deposition method using D4H was obtained in the same manner as in surface treatment 5 except that filler 3 was used instead of filler 1.

Next, a mixture of 10 g of 1% chloroplatinic acid ethanol and 20 g of ethoxy-diethylene glycol acrylate was added to 100 g of the surface-treated filler, the resulting mixture was stirred and mixed for 30 seconds at a rotational speed of 1000 rpm using a rotation/revolution mixing mixer (manufactured by THINKY Corporation, trade name: ARV-310P), then the operation of loosening the mixture was repeated four times, and the mixture was air-dried once. Next, the mixture was heated at a temperature of 120°C for 2 hours in a hot air circulation oven and then heated at a temperature of 120°C for 2 hours under reduced pressure (0.02 KPa or less) to remove excess ethoxy-diethylene glycol acrylate, and then the mixture was cooled to obtain a filler having 0.077% by mass of the group represented by the following formula (1) introduced to the surface. In the formula (1), * represents a point of attachment to a silicon atom.

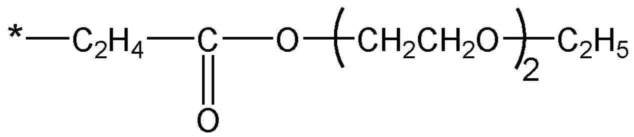

(1)

[Surface treatment 16: surface treatment by direct method using decyltrimethoxysilane]

A filler surface-treated by a direct method using decyltrimethoxysilane was obtained in the same manner as in surface treatment 9 except that filler 4 was used instead of filler 1.

The rate of introduction of a group based on a siloxane and the rate of introduction of a decyl group or the group represented by the formula (1) in the surface treatment were measured by a method according to JIS R1675:2007 "Combustion (high-frequency heating) - infrared absorption method." The total carbon content of a filler (raw powder), the total carbon content of a filler surface-treated by a chemical vapor deposition method using a siloxane, and the total carbon content of a filler having a decyl group or the group represented by the formula (1) introduced were each measured.

The rate of introduction of a group based on a siloxane was calculated from the value obtained by subtracting the total carbon content of the raw powder from the total carbon content of the filler surface-treated by a chemical vapor deposition method using the siloxane.

In addition, the rate of introduction of a decyl group or the group represented by the formula (1) was calculated from the value obtained by subtracting the total carbon content of the filler surface-treated by a chemical vapor deposition method using the siloxane and the total carbon content of the raw powder from the total carbon content of the filler having a decyl group or the group represented by the formula (1) introduced.

The carbon content (% by mass) of 1-decene is 85.62, and the carbon content (% by mass) of ethoxy-diethylene glycol acrylate is 57.43.

(Example 1)

6.25% by mass of addition type silicone 1 was added to a rotation/revolution mixing mixer (manufactured by THINKY Corporation, trade name: ARV-310P), further, 18.75% by mass of filler 1 (surface treatment 1), 25.00% by mass of filler 2 (surface treatment 2), and 50.00% by mass of filler 4 were added, and the resulting mixture was defoamed and stirred for 30 seconds at a rotational speed of 2000 rpm to obtain a thermally conductive composition of Example 1.

(Example 2 and Comparative Examples 1 to 4)

Thermally conductive compositions of each of the Examples and the Comparative Examples were obtained in the same manner as in Example 1 except that the components and the amounts thereof were changed to the types and the amounts blended shown in Table 1.

(Example 3)

8.43% by mass of condensation type silicone 1, 45.53% by mass of filler 3 (surface treatment 11), and 45.53% by mass of filler 5 were placed in a container and dried in an oven at a temperature of 100°C for 30 minutes, then the mixture was stirred for 30 seconds at a rotational speed of 2000 rpm using a rotation/revolution mixing mixer (manufactured by THINKY Corporation, trade name: ARV-310P). The mixture was cooled to room temperature (25°C), then 0.34% by mass of silane coupling agent 1 was added, and the resulting mixture was stirred for 30 seconds at a rotational speed of 2000 rpm using a rotation/revolution mixing mixer. Further, 0.17% by mass of metal complex 1 was added, and the resulting mixture was defoamed and stirred for 30 seconds at a rotational speed of 2000 rpm using a rotation/revolution mixing mixer to obtain a thermally conductive composition of Example 3.

(Examples 4 and 5 and Comparative Examples 5 and 6)

Thermally conductive compositions of each of the Examples and the Comparative Examples were obtained in the same manner as in Example 3 except that the components and the amounts thereof were changed to the types and the amounts blended shown in Table 2.

(Example 6)

8.01% by mass of castor oil-based polyol 1, 0.43% by mass of dispersant 1, 45.26% by mass of filler 3 (surface treatment 11), and 45.26% by mass of filler 5 were placed in a container and dried in an oven at a temperature of 100°C for 30 minutes, then the mixture was stirred for 30 seconds at a rotational speed of 2000 rpm using a rotation/revolution mixing mixer (manufactured by THINKY Corporation, trade name: ARV-310P). The mixture was cooled to room temperature (25°C), then 1.04% by mass of polyisocyanate compound 1 was added, and immediately the resulting mixture was defoamed and stirred for 30 seconds at a rotational speed of 2000 rpm using a rotation/revolution mixing mixer to obtain a thermally conductive composition of Example 6.

(Examples 7 to 9 and Comparative Examples 7 and 8)

Thermally conductive compositions of each of the Examples and the Comparative Examples were obtained in the same manner as in Example 6 except that the components and the amounts thereof were changed to the types and the amounts blended shown in Table 3.

(Example 10)

2.72% by mass of trimethoxysilyl group-containing urethane 1, 6.34% by mass of plasticizer 1, 0.18% by mass of dispersant 1, 45.31% by mass of filler 3 (surface treatment 11), and 45.31% by mass of filler 6 were placed and dried in an oven at a temperature of 100°C for 30 minutes, then the mixture was stirred for 30 seconds at a rotational speed of 2000 rpm using a rotation/revolution mixing mixer (manufactured by THINKY Corporation, trade name: ARV-310P). The mixture was cooled to room temperature (25°C), then 0.14% by mass of metal complex 1 was added, and the resulting mixture was defoamed and stirred for 30 seconds at a rotational speed of 2000 rpm using a rotation/revolution mixing mixer to obtain a thermally conductive composition of Example 10.

(Examples 11 to 13 and Comparative Examples 9 and 10)

Thermally conductive compositions of each of the Examples and the Comparative Examples were obtained in the same manner as in Example 10 except that the components and the amounts thereof were changed to the types and the amounts blended shown in Table 4.

(Creation of test piece)

(1) Cured products of thermally conductive compositions of Examples 1 and 2 and Comparative Examples 1 to 4

The defoamed thermally conductive composition was poured onto a polyester film having a thickness of 0.1 mm subjected to fluorine release treatment, the top thereof was covered with a polyester film having a thickness of 0.1 mm in such a way as not to mix air, and this workpiece was shaped using a rolling roll, cured at 100°C for 15 minutes, and further left at room temperature (23°C) for one day to create a sheet having a thickness of 2 mm. This sheet was cut into strips each having a width of 20 mm, and three strips were stacked to prepare a test piece (length of 80 mm,

width of 20 mm, thickness of 6 mm) of each of the Examples and the Comparative Examples.

The thermally conductive composition of Comparative Example 4 was not cured and was unable to be peeled off from the polyester film having a thickness of 0.1 mm subjected to fluorine release treatment.

(2) Cured products of thermally conductive compositions of Examples 3 to 5 and Comparative Examples 5 and 6

A polyester film having a thickness of 0.1 mm subjected to fluorine release treatment is provided and placed in a mold having a diameter of 45 mm and a thickness of 6 mm. The defoamed thermally conductive composition was poured thereinto in such a way as not to let air in, the surface was flattened using a spatula, and then the mold was left in a constant temperature chamber at a temperature of 23 ± 2°C and a humidity of 50 ± 10% RH for 1 week to obtain a test piece (diameter of 45 mm, thickness of 6 mm) of each of the Examples and the Comparative Examples.

(3) Cured products of thermally conductive compositions of Examples 6 to 13 and Comparative Examples 7 to 10

The defoamed thermally conductive composition was poured into a silicone mold (diameter of 50 mm, depth of 30 mm, 6 cavities) to a height of 8 mm in such a way as not to let air in, and the mold was left in a constant temperature chamber at a temperature of 23 ± 2°C and a humidity of 50 ± 10% RH for 1 week to obtain a test piece (diameter of 50 mm, thickness of 8 mm) of each of the Examples and the Comparative Examples.

The thermally conductive composition of Comparative Example 8 was not cured and was unable to be taken out from the silicone mold.

<Evaluation items>

Using the thermally conductive composition obtained in each of the Examples and the Comparative Examples and the test piece of the thermally conductive composition or the cured product thereof, properties thereof were measured under the following measurement conditions. Results are shown in Tables 1 to 4.

(1) Viscosity

The viscosity of the thermally conductive composition was measured using a flow viscometer (GFT-100EX, manufactured by Shimadzu Corporation) under conditions of a temperature of 30°C, a die hole size (diameter) of 1.0 mm, and a test force of 40 (weight of 7.8 kg) according to JIS K7210:2014.

(2) Hardness

The Asker C hardness of the test piece was measured using a durometer for rubber (manufactured by Kobunshi Keiki Co., Ltd., trade name: Asker Rubber Durometer Type C) according to JIS K7312:1996.

The Asker A hardness of the test piece was measured using a durometer for rubber (manufactured by Kobunshi Keiki Co., Ltd., trade name: Asker Rubber Durometer Type A) according to JIS K7312:1996.

The Shore 00 hardness of the test piece was measured using a durometer for ultra-soft rubber (manufactured by TECLOCK Co., Ltd., trade name: GS-745G) according to ASTM D2240.

(3) Thermal conductivity

The thermal conductivity of the test piece was measured according to ISO 22007-2 using a hot disk method thermophysical property measuring apparatus (manufactured by Kyoto Electronics Manufacturing Co., Ltd., trade name TPS 2500 S).

(4) Restorability

A sheet having a thickness of 2 mm was punched into a circular shape having a diameter of 25 mm to prepare a test piece. With reference to JIS K6301, the test piece was placed between compression plates of an apparatus for measuring compression set (manufactured by Kobunshi Keiki Co., Ltd., trade name: Compression Set Tester) and was exposed at a temperature of 120°C for 24 hours in a hot air circulation oven in a state in which the thickness of the test piece was compressed by 30%. Further, the thickness of the test piece was measured after the compression was released and the test piece was left at room temperature (23°C) for 30 minutes to be cooled. The spacer provided between the compression plates has a thickness of 1.40 mm.

The restorability was calculated from the following expression (i). The restorability shows that the smaller the

numerical value thereof, the more the original thickness is restored.

$$\text{Restorability (\%)} = (T_A - T_B)/(T_A - T_C) \times 100 \qquad \text{(i)}$$

wherein $T_A$ is the original thickness (mm) of the test piece, $T_B$ is the thickness (mm) of the test piece after exposure, and Tc is the thickness (mm) of the spacer.

(5) Heat resistance (hardness increase rate)

[Test pieces in Table 1]

For each test piece in Table 1, the Asker C hardness measured in (2) above is used as the initial hardness. After that, each test piece was exposed at a temperature of 200°C for 168 hours in a hot air circulation oven. The test piece after the exposure was taken out and cooled at room temperature (23°C) for one day. The Asker C hardness of the test piece after the exposure was measured by the same operation as in the measurement of the Asker C hardness in (2) above. The hardness increase rate was calculated from the following expression (ii).

[Test pieces in Table 2]

For each test piece in Table 2, the Asker A hardness measured in (2) above is used as the initial hardness. After that, each test piece was exposed at a temperature of 200°C for 168 hours in a hot air circulation oven. The test piece after the exposure was taken out and cooled at room temperature (23°C) for one day. The Asker A hardness of the test piece after the exposure was measured by the same operation as in the measurement of the Asker A hardness in (2) above. The hardness increase rate was calculated from the following expression (ii).

[Test pieces in Table 4]

For each test piece in Table 4, the Asker A hardness measured in (2) above is used as the initial hardness. After that, each test piece was exposed at a temperature of 130°C for 168 hours in a hot air circulation oven. The test piece after the exposure was taken out and cooled at room temperature (23°C) for one day. The Asker A hardness of the test piece after the exposure was measured by the same operation as in the measurement of the Asker A hardness in (2) above. The hardness increase rate was calculated from the following expression (ii).

For the hardness increase rate, it is considered that the smaller the numerical value thereof, the better the heat resistance.

$$\text{Hardness increase rate (\%)} = (S_A - S_0)/S_0 \times 100 \qquad \text{(ii)}$$

wherein $S_0$ is the initial hardness of the test piece, and $S_A$ is the hardness of the test piece after exposure.

(6) Consistency

The consistency is the penetration number of a 1/4 cone according to JIS K2220:2013, and was measured at a temperature of 23°C using an automatic penetrometer (manufactured by RIGO Co., Ltd., RPM-101).

(7) Pot life

A part of the thermally conductive composition obtained by kneading was taken out, and the initial viscosity was measured using a flow viscometer (GFT-100EX, manufactured by Shimadzu Corporation) under conditions of a temperature of 30°C, a die hole size (diameter) of 1.0 mm, and a test force of 40 (weight of 7.8 kg) according to JIS K7210:2014.

The remaining thermally conductive composition was left in a constant temperature chamber at a temperature of 23 ± 2°C and a humidity of 50 ± 10% RH, the viscosity was measured every 5 minutes, and the time when the viscosity reached twice the initial viscosity was defined as the pot life. A longer pot life shows a slower reaction rate.

(8) Tack-free time

A polyester film having a thickness of 0.1 mm subjected to fluorine release treatment is provided and placed in a mold having a diameter of 45 mm and a thickness of 6 mm. The defoamed thermally conductive composition was poured thereinto in such a way as not to let air in, the surface was flattened using a spatula, then the mold was placed in a constant temperature chamber at a temperature of 23 ± 2°C and a humidity of 50 ± 10% RH, and the time until the surface lost tack was measured every 15 minutes or every 5 minutes.

The tack-free time is an index of a quick-drying property and represents a measure of the curability of a composition. A longer tack-free time shows a slower reaction rate.

(9) Hydrolysis resistance (hardness decrease rate)

The Asker A hardness measured in (2) above is used as the initial hardness. After that, the test piece was exposed in an autoclave (manufactured by TOMY SEIKO Co., Ltd., SS-320) under conditions of a temperature of 121°C and a pressure of $2.0 \times 10^5$ Pa for 48 hours to carry out a PCT test. The test piece after the PCT test was taken out from the autoclave and air-dried for one day, and then the Asker A hardness of the test piece after the PCT test was measured by the same operation as in (2) above. The hardness decrease rate was calculated from the following expression (iii).

For the hardness decrease rate, it is considered that the smaller the numerical value thereof is, the better the hydrolysis resistance is.

$$\text{Hardness decrease rate (\%)} = (S_B - S_0)/S_0 \times 100 \qquad \text{(iii)}$$

wherein $S_0$ is the initial hardness of the test piece, and $S_B$ is the hardness of the test piece after the PCT test.

Table 1

| | | Unit | Example 1 | Example 2 | Comparative Example 1 | Comparative Example 2 | Comparative Example 3 | Comparative Example 4 |
|---|---|---|---|---|---|---|---|---|
| Polymer component | Addition type silicone 1 | % by mass | 6.25 | 6.25 | 6.25 | 6.25 | 6.25 | 6.25 |

(continued)

| | | | Unit | Example 1 | Example 2 | Comparative Example 1 | Comparative Example 2 | Comparative Example 3 | Comparative Example 4 |
|---|---|---|---|---|---|---|---|---|---|
| Filler | Filler (A) | Filler 1 (surface treatment 1) | % by mass | 18.75 | - | - | - | - | - |
| | | Filler 2 (surface treatment 2) | % by mass | 25.00 | - | - | - | - | - |
| | Filler (B) | Filler 1 (surface treatment 3) | % by mass | - | 18.75 | - | - | - | - |
| | | Filler 2 (surface treatment 4) | % by mass | - | 25.00 | - | - | - | - |
| | Filler other than filler (A) and filler (B) | Filler 1 (surface treatment 5) | % by mass | - | - | 18.75 | - | - | - |
| | | Filler 2 (surface treatment 6) | % by mass | - | - | 25.00 | - | - | - |
| | | Filler 1 (surface treatment 7) | % by mass | - | - | - | 18.75 | - | - |
| | | Filler 2 (surface treatment 8) | % by mass | - | - | - | 25.00 | - | - |
| | | Filler 1 (surface treatment 9) | % by mass | - | - | - | - | 18.75 | - |
| | | Filler 2 (surface treatment 10) | % by mass | - | - | - | - | 25.00 | - |
| | | Filler 1 (no surface treatment) | % by mass | - | - | - | - | - | 18.75 |
| | | Filler 2 (no surface treatment) | % by mass | - | - | - | - | - | 25.00 |
| | | Filler 4 (no surface treatment) | % by mass | 50.00 | 50.00 | 50.00 | 50.00 | 50.00 | 50.00 |

(continued)

| | Unit | Example 1 | Example 2 | Comparative Example 1 | Comparative Example 2 | Comparative Example 3 | Comparative Example 4 |
|---|---|---|---|---|---|---|---|
| Total content of filler (A) and filler (B) included in filler | % by mass | 46.67 | 46.67 | 0.00 | 0.00 | 0.00 | 0.00 |
| Viscosity | Pa ▪ s | 150 | 175 | 160 | 165 | 75 | 200 |
| Pot life | Minutes | 15 | 15 | 5 | 5 | 15 | 60 or more |
| Hardness (Asker C hardness) | - | 67 | 63 | 82 | 80 | 40 | -*1 |
| Thermal conductivity | W/m ▪ K | 4.44 | 4.31 | 4.51 | 4.44 | 4.10 | -*1 |
| Restorability | % | 65 | 75 | 55 | 55 | 95 | -*1 |
| Hardness after exposure (Asker C hardness) | -*1 | 82 | 85 | 95 | 95 | 70 | -*1 |
| Heat resistance (hardness increase rate) | % | 22.4 | 34.9 | 15.9 | 18.8 | 75.0 | -*1 |
| *1: Not cured, unmeasurable | | | | | | | |

Both of the thermally conductive compositions of Example 1 and Example 2 including the filler (A) or the filler (B) defined in claim 1 as a filler had a lower viscosity than the thermally conductive composition of Comparative Example 4 including only a non-surface-treated filler as a filler. In addition, both of the test pieces made of the thermally conductive compositions of Example 1 and Example 2, respectively, have a thermal conductivity as high as 4.0 W/m●K or more, and further, have a lower initial hardness than the test pieces made of the thermally conductive compositions of Comparative Example 1 and Comparative Example 2, respectively, including a filler having a SiH group remaining on the surface as a filler, and have a moderate hardness. In Comparative Example 1 and Comparative Example 2, the SiH group remaining on the filler surface acts as a crosslinking agent, and thus the initial hardness is high. In addition, both of the test pieces made of the thermally conductive compositions of Example 1 and Example 2, respectively, have superior restorability, a lower hardness increase rate, and superior heat resistance to the test piece made of the thermally conductive composition of Comparative Example 3 including a filler surface-treated with decyltrimethoxysilane as a filler. Further, the thermally conductive compositions of Example 1 and Example 2 have a longer pot life than the thermally conductive compositions of Comparative Example 1 and Comparative Example 2 and were able to be shaped, and thus can be deemed to have a moderate reaction rate.

Table 2

| | | | Unit | Example 3 | Example 4 | Example 5 | Comparative Example 5 | Comparative Example 6 |
|---|---|---|---|---|---|---|---|---|
| Polymer component | Condensation type silicone 1 | | % by mass | 8.43 | 8.43 | 8.43 | 8.43 | 8.43 |
| Silane coupling agent 1 | | | % by mass | 0.34 | 0.34 | 0.34 | 0.34 | 0.34 |
| Metal complex 1 | | | % by mass | 0.17 | 0.17 | 0.17 | 0.17 | 0.17 |
| Filler | Filler (A) | Filler 3 (surface treatment 11) | % by mass | 45.53 | - | - | - | - |
| | Filler (B) | Filler 3 (surface treatment 12) | % by mass | - | 45.53 | - | - | - |
| | | Filler 3 (surface treatment 13) | % by mass | - | - | 45.53 | - | - |
| | Filler other than filler (A) and filler (B) | Filler 3 (no surface treatment) | % by mass | - | - | - | 45.53 | - |
| | | Filler 5 (no surface treatment) | % by mass | 45.53 | 45.53 | 45.53 | 45.53 | 45.53 |
| | | Filler 3 (surface treatment 14) | % by mass | - | - | - | - | 45.53 |
| Total content of filler (A) and filler (B) included in filler | | | % by mass | 50.00 | 50.00 | 0.00 | 0.00 | 0.00 |
| Consistency (1/4 cone) | | | - | 287 | 249 | 282 | 301 | 245 |
| Tack-free time | | | Minutes | 60 | 60 | 60 | 60 | 15 |
| Hardness (Asker A hardness) | | | - | 85 | 81 | 81 | 90 | 98 |
| Hardness after exposure (Asker A hardness) | | | - | 88 | 85 | 85 | 99 | 99 |
| Heat resistance (hardness increase rate) | | | % | 3.5 | 4.9 | 4.9 | 10.0 | 1.0 |
| Thermal conductivity | | | W/m ▪ K | 2.95 | 2.87 | 2.91 | 2.95 | 2.93 |

Both of the thermally conductive compositions of Examples 3 to 5 including the filler (A) or the filler (B) defined in claim 1 as a filler have a thermal conductivity as high as 2.80 W/m●K or more, have a consistency of 249 to 287 and moderate softness, and have a hardness increase rate as low as 3.5 to 4.9% and excellent heat resistance. In addition, all of the thermally conductive compositions of Examples 3 to 5 have a tack-free time as long as 60 minutes and were cured, and thus can be deemed to have a moderate reaction rate. In addition, from Examples 4 and 5, it can be seen that the smaller the amount of a decyl group introduced to the surface of the filler is, the less likely thixotropy is to be imparted and the higher the consistency is. Further, all of the test pieces made of the thermally conductive compositions of Examples 3 to 5, respectively, have an Asker A hardness of 85 or less and have moderate hardness. On the other hand, Comparative Example 5 including only a non-surface-treated filler as a filler has a consistency as high as 301 and a tack-free time as long as 60 minutes, but has an Asker A hardness of 90 and can be found to be harder than Examples 3 to 5. In addition, Comparative Example 6 including a filler surface-treated with decyltrimethoxysilane as a filler has a lower consistency and a much shorter tack-free time, and has a higher Asker A hardness and can be found to be much harder than Examples 3 to 5.

Table 3

| | | | Unit | Example 6 | Example 7 | Example 8 | Example 9 | Comparative Example 7 | Comparative Example 8 |
|---|---|---|---|---|---|---|---|---|---|
| Polymer component (polyurethane) | Castor oil-based polyol 1 | | % by mass | 8.01 | 8.01 | 8.01 | 8.01 | 8.01 | 8.01 |
| | Polyisocyanate compound 1 | | % by mass | 1.04 | 1.04 | 1.04 | 1.04 | 1.04 | 1.04 |
| Dispersant 1 | | | % by mass | 0.43 | 0.43 | 0.43 | 0.43 | 0.43 | 0.43 |
| Filler | Filler (A) | Filler 3 (surface treatment 11) | % by mass | 45.26 | - | - | - | - | - |
| | Filler (B) | Filler 3 (surface treatment 12) | % by mass | - | 45.26 | - | - | - | - |
| | | Filler 3 (surface treatment 13) | % by mass | - | - | 45.26 | - | - | - |
| | | Filler 3 (surface treatment 15) | % by mass | - | - | - | 45.26 | - | - |
| | Filler other than filler (A) and filler (B) | Filler 3 (no surface treatment) | % by mass | - | - | - | - | 45.26 | - |
| | | Filler 3 (surface treatment 14) | % by mass | - | - | - | - | - | 45.26 |
| | | Filler 5 (no surface treatment) | % by mass | 45.26 | 45.26 | 45.26 | 45.26 | 45.26 | 45.26 |
| Total content of filler (A) and filler (B) included in filler | | | % by mass | 50.00 | 50.00 | 50.00 | 50.00 | 0.00 | 0.00 |
| Consistency (1/4 cone) | | | - | 306 | 298 | 302 | 305 | 282 | 290 |
| Tack-free time | | | Minutes | 120 | 150 | 150 | 150 | 90 | 180 or more |
| Hardness (Shore 00 hardness) | | | - | 82 | 77 | 78 | 75 | 88 | -*2 |
| Thermal conductivity | | | W/m ▪ K | 2.87 | 2.77 | 2.77 | 2.75 | 2.76 | -*2 |

(continued)

| | Unit | Example 6 | Example 7 | Example 8 | Example 9 | Comparative Example 7 | Comparative Example 8 |
|---|---|---|---|---|---|---|---|
| Equivalent ratio [NCO/OH] | - | 1.2 | 1.2 | 1.2 | 1.2 | 1.2 | 1.2 |
| *2: Not cured, unmeasurable | | | | | | | |

All of the thermally conductive compositions of Examples 6 to 9 using a filler including the filler (A) or the filler (B) defined in claim 1 have a thermal conductivity as high as 2.70 W/m●K or more, and have a higher consistency and a lower hardness than the thermally conductive composition of Comparative Example 7 using only a non-surface-treated filler as a filler, and have moderate hardness. Further, the thermally conductive compositions of Examples 6 to 9 have a longer tack-free time than the thermally conductive composition of Comparative Example 7 and were cured, and thus can be deemed to have a moderate reaction rate, and it can be seen that the treatment to the filler surface does not affect the reaction rate. On the other hand, the thermally conductive composition of Comparative Example 8 including a filler surface-treated with decyltrimethoxysilane as a filler has a high consistency but was not cured.

Table 4

| | | Unit | Example 10 | Example 11 | Example 12 | Example 13 | Comparative Example 9 | Comparative Example 10 |
|---|---|---|---|---|---|---|---|---|
| Polymer component | Trimethoxysilyl group-containing polyurethane 1 | % by mass | 2.72 | 2.72 | 2.72 | 2.72 | 2.72 | 2.72 |
| Plasticizer 1 | | % by mass | 6.34 | 6.34 | 6.34 | 6.34 | 6.34 | 6.34 |
| Dispersant 1 | | % by mass | 0.18 | 0.18 | 0.18 | 0.18 | 0.18 | 0.18 |
| Metal complex 1 | | % by mass | 0.14 | 0.14 | 0.14 | 0.14 | 0.14 | 0.14 |

(continued)

| | | | Unit | Example 10 | Example 11 | Example 12 | Example 13 | Comparative Example 9 | Comparative Example 10 |
|---|---|---|---|---|---|---|---|---|---|
| Filler | Filler (A) | Filler 3 (surface treatment 11) | % by mass | 45.31 | - | - | - | - | - |
| | Filler (B) | Filler 3 (surface treatment 12) | % by mass | - | 45.31 | - | - | - | - |
| | | Filler 3 (surface treatment 13) | % by mass | - | - | 45.31 | - | - | - |
| | | Filler 3 (surface treatment 15) | % by mass | - | - | - | 45.31 | - | - |
| | Filler other than filler (A) and filler (B) | Filler 3 (no surface treatment) | % by mass | < | < | - | < | 45.31 | - |
| | | Filler 4 (surface treatment 16) | % by mass | - | - | - | - | - | 45.31 |
| | | Filler 6 (no surface treatment) | % by mass | 45.31 | 45.31 | 45.31 | 45.31 | 45.31 | 45.31 |
| Total content of filler (A) and filler (B) included in filler | | | % by mass | 50.00 | 50.00 | 50.00 | 50.00 | 0.00 | 0.00 |
| Consistency (1/4 cone) | | | - | 325 | 332 | 328 | 342 | 305 | 375 |
| Tack-free time | | | Minutes | 10 | 10 | 10 | 10 | 5 | 10 |

(continued)

| | Unit | Example 10 | Example 11 | Example 12 | Example 13 | Comparative Example 9 | Comparative Example 10 |
|---|---|---|---|---|---|---|---|
| Thermal conductivity | W/m • K | 2.98 | 2.95 | 2.93 | 2.96 | 2.97 | 2.95 |
| Hardness (Asker A hardness) | - | 57 | 54 | 55 | 54 | 55 | 53 |
| Hardness after exposure (Asker A hardness) | - | 85 | 80 | 82 | 81 | 88 | 82 |
| Heat resistance (hardness increase rate) | % | 49.1 | 48.1 | 49.1 | 50.0 | 60.0 | 54.7 |
| Hardness after PCT test (Asker A hardness) | - | 50 | 48 | 47 | 45 | 34 | 36 |
| Hydrolysis resistance (hardness decrease rate) | % | 12.3 | 11.1 | 14.5 | 16.7 | 38.2 | 32.1 |

All of the thermally conductive compositions of Examples 10 to 13 using a filler including the filler (A) or the filler (B) defined in claim 1 have a thermal conductivity as high as 2.90 W/m●K or more, and have a higher consistency than the thermally conductive composition of Comparative Example 9 using only a non-surface-treated filler as a filler. All of the cured products of the thermally conductive compositions of Examples 10 to 13 have a lower hardness increase rate than the cured products of the thermally conductive compositions of Comparative Examples 9 and 10, and thus can be found to have improved heat resistance. In addition, all of the cured products of the thermally conductive compositions of Examples 10 to 13 have a lower hardness decrease rate than the cured products of the thermally conductive compositions of Comparative Examples 9 and 10, and thus can be found to have improved hydrolysis resistance. Further, the thermally conductive compositions of Examples 10 to 13 have a longer tack-free time than the thermally conductive composition of Comparative Example 9 and were cured, and thus can be deemed to have a moderate reaction rate, and it can be seen that the treatment to the filler does not affect the reaction rate.

## Claims

**1.** A thermally conductive composition comprising:

a filler; and a polymer component, wherein
the filler comprises at least one surface-treated filler selected from the group consisting of the following filler (A) and filler (B):

Filler (A): A filler surface-treated by a chemical vapor deposition method using a siloxane having one SiH group
Filler (B): A filler surface-treated by a chemical vapor deposition method using a siloxane having two or more SiH groups, wherein at least one group selected from the group consisting of an unsubstituted alkyl group having 6 to 20 carbon atoms, an alkyl group having 2 to 20 carbon atoms having a substituent, and a group represented by the following general formula (I) is further bonded to a silicon atom on a surface of the filler and introduced:

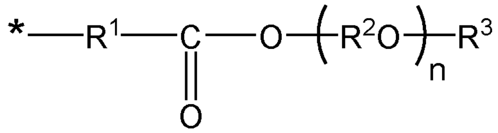 (I)

wherein $R^1$ and $R^2$ are each independently an alkylene group having 2 to 6 carbon atoms, and $R^3$ is an alkyl group having 1 to 3 carbon atoms; when a plurality of $R^2$ are present, the plurality of $R^2$ are identical to or different from each other; n is an integer of 1 to 9; and * represents a point of attachment to a silicon atom.

**2.** The thermally conductive composition according to claim 1, wherein a total content of the filler (A) and the filler (B) included in the filler is 30% by mass or more and 100% by mass or less.

**3.** The thermally conductive composition according to claim 1 or 2, wherein the filler is at least one selected from the group consisting of a metal, silicon, a metal oxide, a nitride, and a composite oxide.

**4.** The thermally conductive composition according to any one of claims 1 to 3, wherein the polymer component is at least one selected from the group consisting of a thermosetting resin, an elastomer, and an oil.

**5.** The thermally conductive composition according to any one of claims 1 to 4, wherein a content of the filler is 30.0% by mass or more and 99.8% by mass or less, and a content of the polymer component is 0.2% by mass or more and 70.0% by mass or less, based on a total amount of the thermally conductive composition.

**6.** The thermally conductive composition according to any one of claims 1 to 5, wherein a restorability calculated from the following expression (i) is 85% or less:

$$\text{Restorability (\%)} = (T_A - T_B)/(T_A - T_C) \times 100 \qquad \text{(i)}$$

wherein $T_A$ is an original thickness (mm) of a test piece made of a cured product of the thermally conductive composition, $T_B$ is a thickness (mm) of the test piece after exposure at a temperature of 120°C for 24 hours in a state in which the test piece is compressed by 30% of the original thickness, and Tc is a thickness (mm) of a spacer of a compression apparatus.

**7.** The thermally conductive composition according to any one of claims 1 to 6, wherein a hardness increase rate calculated from the following expression (ii) is 50% or less:

$$\text{Hardness increase rate (\%)} = (S_A - S_0)/S_0 \times 100 \qquad \text{(ii)}$$

wherein $S_0$ is an initial hardness of a test piece made of a cured product of the thermally conductive composition, and $S_A$ is a hardness of the test piece after exposure at a temperature of 130°C or 200°C for 168 hours.

**8.** A cured product of the thermally conductive composition according to any one of claims 1 to 7.

**9.** The cured product according to claim 8, wherein a thermal conductivity is 1.0 W/m●K or more.

# INTERNATIONAL SEARCH REPORT

International application No.
**PCT/JP2022/021189**

## A. CLASSIFICATION OF SUBJECT MATTER

***C08L 101/00***(2006.01)i; ***C08K 9/06***(2006.01)i; ***C08L 75/04***(2006.01)i; ***C08L 83/06***(2006.01)i; ***C08L 83/07***(2006.01)i
FI: C08L101/00; C08K9/06; C08L75/04; C08L83/07; C08L83/06

According to International Patent Classification (IPC) or to both national classification and IPC

## B. FIELDS SEARCHED

Minimum documentation searched (classification system followed by classification symbols)

C08L101/00; C08K9/06; C08L75/04; C08L83/06; C08L83/07

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | WO 2014/112464 A1 (MITSUBISHI GAS CHEMICAL COMPANY, INC.) 24 July 2014 (2014-07-24)<br>entire text | 1-9 |
| A | WO 2021/006310 A1 (SHOWA DENKO KK) 14 January 2021 (2021-01-14)<br>entire text | 1-9 |
| A | JP 2017-105659 A (SHINETSU CHEMICAL CO) 15 June 2017 (2017-06-15)<br>entire text | 1-9 |
| A | JP 2017-508024 A (EVONIK DEGUSSA GMBH) 23 March 2017 (2017-03-23)<br>entire text | 1-9 |
| A | JP 2016-540866 A (EVONIK DEGUSSA GMBH) 28 December 2016 (2016-12-28)<br>entire text | 1-9 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/021189**

| Patent document cited in search report | Publication date (day/month/year) | Patent family member(s) | Publication date (day/month/year) |
|---|---|---|---|
| WO 2014/112464 A1 | 24 July 2014 | US 2015/0344733 A1<br>entire text<br>EP 2947122 A1<br>CN 105073899 A<br>KR 10-2015-0105417 A | |
| WO 2021/006310 A1 | 14 January 2021 | EP 3932859 A1<br>entire text<br>CN 113498422 A | |
| JP 2017-105659 A | 15 June 2017 | (Family: none) | |
| JP 2017-508024 A | 23 March 2017 | US 2017/0002181 A1<br>entire text<br>WO 2015/091041 A1<br>EP 3083837 A1<br>KR 10-2016-0102224 A<br>CN 106211778 A | |
| JP 2016-540866 A | 28 December 2016 | US 2016/0362556 A1<br>entire text<br>WO 2015/091177 A1<br>EP 3083789 A1<br>KR 10-2016-0101977 A<br>CN 106029762 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009136542 A
- WO 2019069535 A
- JP 2020180200 A